# EUROPÄISCHE PATENTSCHRIFT

(11) **EP 4 021 961 B1**
(45) Veröffentlichungstag und Bekanntmachung des Hinweises auf die Patenterteilung: **27.05.2026**
(21) Anmeldenummer: 20761210.2
(22) Anmeldetag: 21.08.2020
(51) Int. Cl.: C08J 5/04, C08G 18/32, C08G 18/73, B29C 73/22

(54) **SELBSTREPARIERENDER FASERVERBUNDWERKSTOFF SOWIE DESSEN VERWENDUNG**
SELF-REPAIRING FIBRE-REINFORCED COMPOSITE MATERIAL, AND USE THEREOF
MATÉRIAU COMPOSITE RENFORCÉ DE FIBRES À AUTO-RÉPARATION, ET SON UTILISATION

(30) Priorität: 30.08.2019 DE 102019123355
(43) Veröffentlichungstag der Anmeldung: 06.07.2022
(73) Patentinhaber: Deutsche Institute für Textil- und Faserforschung Denkendorf, 73770 Denkendorf (DE)
(72) Erfinder: Gähr, Frank, 73730 Esslingen (DE); Lehr, Thomas, 72762 Reutlingen (DE)
(74) Vertreter: Meissner Bolte Partnerschaft mbB
(86) Internationale Anmeldenummer: PCT/EP2020/073505
(87) Internationale Veröffentlichungsnummer: WO 2021/037726

(56) Entgegenhaltungen:
- US-A1- 2015 159 316
- MURPHY E B ET AL: "The world of smart healable materials", PROGRESS IN POLYMER SCIENCE, PERGAMON PRESS, OXFORD, GB, vol. 35, no. 1-2, 3 November 2009 (2009-11-03), pages 223 - 251, XP026852569, ISSN: 0079-6700, [retrieved on 20091103]
- SCHEINER MARGARET ET AL: "Progress towards self-healing polymers for composite structural applications", POLYMER, ELSEVIER SCIENCE PUBLISHERS B.V, GB, vol. 83, 9 December 2015 (2015-12-09), pages 260 - 282, XP029391577, ISSN: 0032-3861, DOI: 10.1016/J.POLYMER.2015.11.008
- KANU NAND JEE ET AL: "Self-healing composites: A state-of-the-art review", COMPOSITES PART A: APPLIED SCIENCE AND MANUFACTURING, vol. 121, 9 April 2019 (2019-04-09), pages 474 - 486, XP085670865, ISSN: 1359-835X, DOI: 10.1016/J.COMPOSITESA.2019.04.012
- WHITE S R ET AL: "Autonomic healing of polymer composites", NATURE, MACMILLAN JOURNALS LTD, LONDON, vol. 409, 15 February 2001 (2001-02-15), pages 794 - 797, XP002605760, ISSN: 0028-0836

## Beschreibung

Die Erfindung betrifft einen selbstreparierenden Faserverbundwerkstoff mit in einer Matrix eingebetteten Glashohlfasern sowie dessen Verwendung.

Faserverbundwerkstoffe (FVK) bestehen üblicherweise aus einer Polymermatrix, bestehend zumeist aus einem Harz, in das zur Verstärkung der mechanischen Eigenschaften Hochfest-/Hochmodul-Fasern eingebettet sind. Hierbei kommen je nach Marktsegment und Anforderungsprofil insbesondere Glasfasern (GFK), Aramidfasern (AFK) oder Carbonfasern (CFK) zum Einsatz. Zielmärkte sind solche, in denen entweder eine Gewichtsersparnis und/oder Energieersparnis von Bedeutung ist, etwa im Fahrzeugbereich, in der Luft- und Raumfahrt, im Bootsbau, in der Architektur oder in der Energiegewinnung durch Windkraft. Ein weiterer Bereich sind Sportartikel, die meist unabhängig vom Preis am Markt verkäuflich sind.

Große Probleme bereitet die durch mechanischen Stress, klimatisch oder andersartig gelagerte Faktoren bedingte Entstehung von Mikrorissen in der Polymermatrix. Weiten sich diese Strukturdefekte zu einem makroskopischen Riss aus, werden entweder die Fasern beim Bruch der Matrix abgeschert oder es kommt zu einer Delamination zwischen zwei Faserlagen. Diese führen im Ernstfall zum Totalversagen entsprechender Bauteile. Häufig tritt ein derartiges Versagen spontan und ohne vorher visuell erkennbares Schadensbild auf. Daher werden die Bauteile meist sehr konservativ ausgelegt und damit überdimensioniert.

Es ist hinreichend bekannt und belegt, dass Mikrorisse in Polymermatrices durch inkorporierte, aushärtbare Monomersysteme wieder verschlossen werden können. Siehe hierzu zum Beispiel Murphy E B, Wudl F: "The world of smart healable materials", Progr. Polym. Sci. 35 (2010), 223-251 sowie Hager M. D., van der Zwaag S., Schubert S. (Eds.), Self-healing Materials, Adv. Polym. Sci. 273, Springer International Publishing Switzerland, 2016. Eine selbstreparierende bzw. selbstheilende Wirkung wird erzielt, indem ein vernetzbares Monomer geschützt und möglichst homogen verteilt in das Verbundmaterial eingebracht wird. In der Regel werden als Depot hierzu bisher Mikrokapseln oder Hohlfasern verwendet, die mit reaktiven Monomersystemen gefüllt sind. Bei Auftreten der Mikrorisse werden diese lokal durch die austretende Monomerflüssigkeit, insbesondere aufgrund der wirkenden Kapillarkräfte befüllt, und durch einen in der Matrix verteilten speziellen Katalysator wird die die Aushärtung ausgelöst. Ein Zusammenwachsen der Mikrorisse hin zum Makroriss und zur Delamination von Faser und Matrix kann so verhindert oder zumindest deutlich hinausgezögert werden.

White et al. (Nature 409, 794-797 (2001)) beschreiben mit einem speziellen Monomer gefüllte Mikrokapseln als Depot. Diese werden bei der Herstellung homogen in der Matrix dispergiert. Im Falle des Auftretens eines Mikrorisses werden einige Mikrokapseln aufgerissen, das Monomer diffundiert durch Kapillarkräfte in den Mikroriss und vernetzt an einem ebenfalls in der Matrix vorhandenen Katalysator zu einem festen Polymer. Dadurch wird die weitere Ausbreitung des Mikrorisses und somit ein Bauteilversagen verhindert. Das von White et al. verwendete System nutzt die metathesebasierte Ringöffnungspolymerisation von Dicyclopentadien (DCPD). Die Polymerisation wird durch einen Grubbs-Katalysator der ersten Generation ausgelöst. Nachteilig ist, dass die Matrix mit den Mikrosphären in einem hohen Grade befüllt werden muss, wodurch sowohl die Matrixeigenschaften negativ beeinflusst werden als auch unnötig viele Mikrokapseln mit einem hohen Kostenfaktor zum Einsatz kommen müssen.

In der US 2011/0118385 A1 werden Glashohlfasern (GHF) als Speichermedium für polymerisierbare Substanzen verwendet. Die GHF werden dabei als Komposit aus vorimprägnierten E-Glas-Lagen und Epoxid mit zusätzlichen Selbstheilungsschichten aus Glashohlfaser-Lagen an kritischen Schnittstellen eingesetzt. Die GHF erfüllen durch diese Aufmachung gleichzeitig die Speicherfunktion für die Selbstheilungsmittel sowie die Verstärkungsfunktion. Der Epoxidmatrix ist ein Hoveyda-Grubbs-Katalysator der zweiten Generation homogen verteilt zugemischt. Vorteilhaft ist, dass durch die faserförmige Geometrie der GHF das Aufbrechen im Scherungsfall und damit die Freisetzung der Füllung aufgrund des hohen Aspektverhältnisses sehr viel wahrscheinlicher als bei den sphärischen Mikrokapseln ist. Beim Einsatz von Hohlfasern ist aufgrund der Geometrie außerdem ein geringerer Füllgrad ausreichend. Matrix-reiche Bereiche sind bei gewebeverstärkten Compositen durch die Ondulation der Garne in allen Garnzwischenräumen gegeben. Matrix-reiche Bereiche dominieren außerdem beim Fügen von FVK an den Verbindungsflächen, sodass bei dieser Konstellation die Heilungsfunktion durch die glashohlfasergefüllte Matrix insbesondere auch an den kritischen Verbindungsflächen wirksam wird. Daraus ergaben sich nach einer anfänglichen Verringerung der Festigkeit um 16% des GFK (glasfaserverstärkter Kunststoff) bzw. um 8% des CFK (kohlenstoffverstärkter Kunststoff) durch die Einbindung der Glashohlfasern nach Belastung eine 100%ige (GFK) bzw. 97%-ige (CFK) Wiederherstellung der Ausgangsfestigkeit. In beiden Fällen mussten die Verbundwerkstoffe dafür jedoch einer Wärmebehandlung unterzogen werden, die den Transport des Heilungsmittels zum beschädigten Bereich sowie dessen Aushärtung unterstützt und somit keine wirklich autonome Selbstheilung darstellt.

Nachteile der im Stand der Technik beschriebenen Verfahren für den Fall der Verwendung von Hohlfasern, die mit härtbaren Substanzen befüllt werden, sind:
- Die hohe Viskosität der verwendeten Edukte macht für die Herstellung aufwändige Befüllungsmaßnahmen der Glaskapillaren notwendig, wie etwa das Anlegen von Druck oder Vakuum.
- Glaskapillaren mit engem Kapillarquerschnitt stehen nicht zur Verfügung.
- Der Katalysator wird in die Matrix eingemischt, was sehr hohe Mengen an teurem und meist toxischem Katalysator erforderlich macht.
- Die Verkapselung der Monomere erfolgt händisch; ein technisch gewünschter Automatisierungsprozess ist nicht realisierbar.
- Um eine nachweisbare Selbstheilung auszulösen, sind, bezogen auf den gesamten Faserverbundkörper, inakzeptabel hohe Mengen an aushärtenden Substanzen nötig.
- Zur Selbstheilung werden Systeme eingesetzt, deren Wirksamkeit entweder über UV-Bestrahlung oder Wärme (zum Beispiel Diels-Alder-Reaktion) ausgelöst werden muss, was zu einer signifikanten Einschränkung des jeweiligen Anwendungsbereichs führt.

Die Aufgabe der vorliegenden Erfindung besteht darin, die Nachteile der heute nach dem Stand der Technik beschriebenen selbstheilenden bzw. selbstreparierenden Systeme zu beheben. Erfindungsgemäß wird diese Aufgabe durch einen selbstreparierenden Faserverbundwerkstoff mit in einer Matrix eingebetteten Hohlfasern gelöst, der dadurch gekennzeichnet ist, dass die Glashohlfasern endlos und an ihren Enden geschlossen sind, wobei Glashohlfasern (A) ein oder mehrere Polyisocyanate und Glashohlfasern (B) ein oder mehrere Polyole enthalten und die Polyisocyanate und die Polyole bei Rissbildung innerhalb der Matrix durch Bruch der Glashohlfasern aus diesen auslaufen und miteinander unter Bildung von Polyurethan reagieren und die Risse ausfüllen, wobei die Polyole, gegebenenfalls verdünnt, insbesondere eine Viskosität bei 20°C von mindestens 0,01 Pa·s, insbesondere von 0,02 Pa·s bis 0,8 Pa·s, aufweisen. Als weitere bevorzugte Rahmenbedingung für die angesprochene Viskosität des Polyols, insbesondere Diols, in den Glashohlfasern (B) könnte angegeben werden: 0,01 bis 0,7 Pa·s, insbesondere 0,02 bis 0,5 Pa·s. Ein Bereich von 0,02 bis 0,3 Pa·s wird als besonders bevorzugt bezeichnet. Die Bestimmung der Viskosität, kurz bezeichnet mit η, wird mit Hilfe eines Rotationsviskosimeters nach DIN EN ISO 3219, Jahrgang 1994-10, bei 20°C bestimmt.

Nachfolgend soll auf die vorteilhaften Ausgestaltungen des erfindungsgemäßen selbstreparierenden Faserverbundwerkstoffs eingegangen werden:
Es ist bevorzugt, dass die Matrix auf einem organischen Material in Form eines Duroplasts oder auf einem anorganischen Material in Form von Keramik oder Beton beruht. Hierbei gilt es als bevorzugt, dass die duroplastische Matrix auf einem Epoxidharz (EP), Polyurethan (PUR), ungesättigten Polyesterharz (UP), Polyvinylesterharz (VE), Phenol-Formaldehydharz (PF), Diallylphthalatharz (DAP), Methacrylatharz (MMA), Polyurethan (PUR), Aminoharze, insbesondere Melaminharz (MF/MP) und Harnstoffharz (UF) beruht.

Ein besonderes Kennzeichen der Erfindung ist es, dass die in die Matrix eingebetteten Glashohlfasern endlos und an ihren Enden geschlossen sind. Darüber hinaus ist es zweckmäßig, dass die Endlosfasern eine Länge von mehr als 3 cm, insbesondere von mehr als 5 cm, als Filamentgarn bzw. Filamentbündel aufweisen.

Um ihre wesentliche Funktion zu erfüllen, nämlich bei Auftreten von Rissen in der Matrix zu brechen, wird es bevorzugt, dass die Glashohlfasern eine Bruchfestigkeit (nach DIN 53842-1:1976-04) in Längsrichtung von 5 bis 80, insbesondere von 20 bis 60, und/oder eine Zugdehnung (nach DIN 53842-1:1976-04) von 0,5 bis 5, insbesondere von 1 bis 3,5, und/oder einen Elastizitätsmodul von weniger als 50 GPa (nach DIN 53842-1: 1976-04) aufweisen. Zur Ermittlung der entsprechenden Kenndaten siehe R. Teschner: "Glasfasern", Springer-Verlag Berlin, Heidelberg, 2013. Diese Brüchigkeitsanforderungen werden von normalem Glas, so insbesondere in Form von E-Glas, die Glashohlfasern aufbauen, erfüllt. Bei E-Glas handelt es sich um ein Aluminium-Borosilikat-Glas. E-Glas ist die mit Abstand bei GFK am häufigsten verwendete Glassorte.

Die angesprochene Rissbildung in der Matrix kann beispielsweise aufgrund folgender Einwirkungen eintreten: Deformation durch Schlageinwirkung, Biegebeanspruchung oder Delamination von Faser und Matrix aufgrund von Hitzeeinwirkung oder Witterungseinfluss, wie zum Beispiel UV-Licht.

Um den erfindungsgemäßen selbstreparierenden Faserverbundwerkstoff weiterhin zu optimieren, gilt es als bevorzugt, dass der Innendurchmesser der Glashohlfasern zwischen 2 µm bis 200 µm, vorzugsweise zwischen 5 µm und 100 µm, insbesondere zwischen 5 µm und 30 µm, und deren Außendurchmesser zwischen 5 µm und 1 mm, vorzugsweise zwischen 8 µm und 750 µm, insbesondere zwischen 10 µm und 50 µm, liegt. Gleichermaßen vorteilhaft ist es, wenn das Verhältnis Außendurchmesser/Innendurchmesser der Glashohlfasern 5 bis 1,5, insbesondere 3 bis 2 beträgt.

Es gilt im Rahmen der Erfindung als besonders bevorzugt, wenn die endlosen Glashohlfasern in ein textiles Flächengebilde, insbesondere ein Gewebe und/oder in ein Tape, einbezogen sind. Von besonderem Vorteil ist es, wenn die endlosen Glashohlfasern in Form von Rovings vorliegen und/oder in ein textiles Flächengebilde, insbesondere in ein Gewebe und/oder in ein Tape, einbezogen sind. Als Roving wird ein Bündel, Strang oder Multifilamentgarn aus parallel angeordneten Filamenten bezeichnet und das gewöhnlicherweise mit einer Schlichte versehen ist. Bei einem Tape handelt es sich um flach angeordnete Filamentbündel bzw. Rovings, die eindirektional (UD) oder mehrdirektional gelegt werden. Die Tapelegetechnik ermöglicht die Herstellung von Bauteilen mit sehr geringem Gewicht, indem mit Matrix imprägnierte Hochleistungs-Faserbändchen entlang den wirkenden Kräften im Bauteil definiert abgelegt werden. Die Ablage der Fasern findet in der Ebene statt, wobei die Ablage der Faser-Tapes so lange wiederholt wird, bis das Bauteil mit den geforderten Faserrichtungen in den einzelnen Lagen bis zur berechneten Dicke des Bauteils aufgebaut ist. Das Faserpaket wird erst in einem folgenden Umformprozess in eine dreidimensionale Struktur umgeformt. Dies ermöglicht eine hohe Geschwindigkeit bei der Faserablage und gleichzeitig eine hohe Gestaltungsfreiheit in der Bauteilgeometrie.

Es ist zweckmäßig, dem Abstand der Glashohlfasern in der jeweiligen Matrix zur Optimierung Aufmerksamkeit zuzuwenden. So gilt es als vorteilhaft, wenn sich der Abstand der Glashohlfasern nach der Art der Matrix und den darin auftretenden Mikrorissen bestimmt, die die Glashohlfasern (A) sowie Glashohlfasern (B) brechen, so dass deren Inhalt die Risse unter Polyurethanbildung ausfüllt. Eine vorteilhafte Weiterbildung dieses Gedankens besteht darin, dass der Abstand der Glashohlfasern (A) und Glashohlfasern (B) in der Dimension eines Mikrorisses von etwa 1 bis 5 µm, insbesondere von etwa 2 bis 4 µm, liegt.

In den angesprochenen Glashohlfasern (A) sowie Glashohlfasern (B) befinden sich die relevanten Reaktionspartner in Form der Polyisocyanate und Polyole, die bei Glasbruch dann, wie bereits zum Ausdruck gebracht, aus den Glashohlfasern austreten und innerhalb des Volumens des Risses in Reaktion treten und diesen Riss unter Polyurethanbildung vorteilhaft ausfüllen. Hierbei stellen sich die weiteren Vorteile ein, dass die Reaktion bei Raumtemperatur abläuft und deshalb kein Auslösen der Reaktion durch externe Einwirkung wie Temperatur, elektromagnetische Strahlung oder Strom erfordert.

Zu den Reaktionspartnern innerhalb der Glashohlfasern (A) und Glashohlfasern (B) ist auszuführen, dass es sich hier abstrakt um Polyisocyanate einerseits und um Polyole andererseits handelt. Hierbei gilt es als vorteilhaft, wenn das Polyisocyanat in Form von Diisocyanat vorliegt, insbesondere in Form von 1,6-Hexamethylendiisocyanat, Isophorondiisocyanat, Toluoldiisocyanat, Pentamethylendiisocyanat, Methylen-diphenyldiisocyanat, 4,4'-Diisocyanatodicyclohexylmethan, 1,5-Naphthalindiisocyanat und/oder Xyloldiisocyanat und das Polyol vorzugsweise in Form eines Diols vorliegt, insbesondere in Form von Polyethylenglykolen, Monoethylenglykol, Diethylenglykol, 1,2- oder 1,3-Propandiol, 1,4-Butandiol oder niederen Polypropylenglykolen.

Es ist bevorzugt, dass das Molverhältnis von Polyisocyanat zu Polyol, insbesondere von Diisocyanat zu Diol, bezogen auf das Gesamtsystem, etwa 1:1 beträgt und bei Unterschiedlichkeit der Funktionalitäten des Polyols und des Polyols das jeweilige Äquivalenzverhältnis auch etwa 1:1 beträgt. Das angesprochene Molverhältnis bzw. Äquivalenzverhältnis kann in Einzelfällen gewissen Schwankungen unterliegen, ohne dass der erfindungsgemäß angestrebte Effekt wesentlich beeinträchtigt wird. So ist es zweckmäßig, dass die Abweichung des Molverhältnisses bzw. des Äquivalenzverhältnisses nicht mehr als 10% beträgt und insbesondere im Rahmen von etwa 5 bis 10% liegt. Es steht dem Fachmann frei, vernetzend wirkende tris- und höherfunktionale Isocyanate und/oder Alkohole zur Einstellung bestimmter mechanischer Kennwerte zuzusetzen, wobei die Abweichung des Molverhältnisses bzw. des Äquivalenzverhältnisses von Diisocyanat und Diol nicht mehr als 10% beträgt und insbesondere im Rahmen von etwa 5 bis 10% liegt. Beispiele für mehrwertige Alkohole (Polyole) sind Trimethylolpropan, Pentaerythritol und Zuckeralkohole, insbesondere Sorbit.

Bei den angesprochenen chemischen Abläufen ist es zweckmäßig, wenn Katalysatoren einbezogen werden. Hierbei ist es vorteilhaft, dass für die Umsetzung der Polyisocyanate der Polyole im Falle einer Rissbildung in der Matrix demzufolge Katalysatoren einbezogen werden, wobei die Katalysatoren insbesondere Zinnverbindungen, insbesondere Zinnbutyllaureat, darstellen.

Auch ist es von Nutzen, dass der Katalysator zusammen mit dem Polyol in der Glashohlfaser (B) vorliegt. Dies führt zu optimalen chemischen Abläufen. Grundsätzlich kann der Katalysator auch in der Matrix als solcher, d.h. außerhalb der Glashohlfasern, vorliegen, aber auch in speziellen Fällen in dem Polyisocyanat, das in der Glashohlfaser (A) enthalten ist.

Nach einer bevorzugten Ausgestaltung wird demnach der Katalysator dem in der Glashohlfaser (A) enthaltenen Diol zugesetzt. Diese Mischung wird in die entsprechenden Kapillaren eingefüllt. Die Katalysatorkonzentration in der Mischung kann zwischen 5 und 2500 ppm, insbesondere zwischen 5 und 1000 ppm, betragen, wobei der Bereich von etwa 100 ppm bis etwa 2500 ppm an Katalysator besonders bevorzugt herangezogen wird. Bevorzugt ist es, dies im Hinblick auf die homogenen Vermischbarkeiten mit dem Diol einerseits und mit der Wirksamkeit in Bezug auf die Polymerisation andererseits, etwa 100 ppm bis etwa 2500 ppm vom Katalysator heranzuziehen. Die notwendige Katalysatormenge im Gesamtverbundkörper ist somit um ein Vielfaches geringer als nach den Lehren des Standes der Technik, was ein bedeutsamer Vorteil ist.

In der Regel ist es vorteilhaft, wenn der erfindungsgemäße selbstreparierende Faserverbundwerkstoff zusätzlich Verstärkungsfasern enthält, insbesondere Verstärkungsfasern in Form von organischen und/oder anorganischen Fasern, insbesondere Glasfasern (GF), Mineralfasern (MF), Keramikfasern, Kohlenstofffasern (CF) oder Naturfasern (NF) als eindimensionale Fasern oder Rovings, zweidimensionale Textilien, insbesondere in Form von Geweben und Gelegen, oder dreidimensionale Verstärkungsstrukturen in Form von Laminaten. Zweckmäßig ist es hierbei, dass die weiteren Verstärkungsfasern in Form von Langfasern einer Länge von 1 ≥ L ≥ 50 mm oder von Endlosfasern einer Länge von > 50 mm vorliegen, insbesondere in Form von Rovings, Gewebe, Gelege, Multiaxialgelegen und/oder Gestricken. Auch ist es vorteilhaft, wenn in dem Falle des zusätzlichen Einbeziehens von Verstärkungsfasern der genannten Art eine quantitative Relation zwischen den Glashohlfasern und den zusätzlichen Verstärkungsfasern bedacht wird. Dabei ist es zweckmäßig, dass die Gesamtheit der einbezogenen Fasern zu 5 bis 30 Gew.-%, vorzugsweise 10 bis 25 Gew.-% und insbesondere 12 bis 20 Gew.-%, auf Glashohlfasern entfällt und der Rest auf die weiteren Verstärkungsfasern. Auch könnte man eine Quantifizierung über das Gewichtsverhältnis von Glasfasern zu weiteren Verstärkungsfasern vornehmen. Hierbei ist es von Vorteil, dass das Gewichtsverhältnis von Glashohlfasern zu weiteren Verstärkungsfasern 1:10 bis 1:1, insbesondere 1:5 bis 3:5, beträgt. Hierbei sind die Viskositätsangaben, wie sie vorstehend in Zusammenhang mit der Füllung der Glashohlfaser (B) angegeben worden sind, entsprechend anzuwenden. Bevorzugt werden hierbei die bereits vorstehend als vorteilhafte Diisocyanate herausgestellten Verbindungen herangezogen.

Von besonderem Vorteil ist es, wenn in allen Fällen der endlosen Glashohlfasern, insbesondere in ein textiles Flächengebilde einbezogen, die endlosen Hohlfasern an ihren Enden mittels eines schnell härtenden Klebers oder Laserstrahlen geschlossen werden. Als schnell härtender Kleber kann insbesondere ein üblicher Sekundenkleber auf Cyanoacrylat-Basis verwendet werden. Zum Schließen mit Laserstrahlen ist auf Folgendes zu verweisen: Es besteht die Möglichkeit, die Filamente mit einem Laser zu schneiden und gleichzeitig abzuschmelzen, d.h. zu verschließen. Als Laser werden bevorzugt gepulste Laser verwendet, wie etwa ein gepulster CO₂-Laser. Unter Umständen kann es erforderlich sein, den Schnittweg mehrfach mit dem Laser abzufahren, um sämtliche Fasern eines Glashohlfaserbündels abzuschneiden. Mikroskopische Untersuchungen zeigen, dass keine unerwünschten Polymerisationsreaktionen auftreten, die sich als graue Flockulate oder Niederschläge nach der Laserbestrahlung an den zugeschmolzenen Filamentenden zeigen würden. Vorteilhafte Versuchsbedingungen und Lasereinstellungen sind den Beispielen zu entnehmen.

Der selbstreparierende Faserverbundwerkstoff ist insbesondere dadurch vorteilhaft weitergebildet, dass die Polyole, gegebenenfalls mit Wasser und/oder einem Alkohol verdünnt, eine Viskosität von mindestens 0,01 Pa·s. Hierbei gelten die vorstehenden Ausführungen zur Viskosität des unverdünnten Polyols in der Glashohlfaser (B) entsprechend.

Der erfindungsgemäße selbstreparierende Faserverbundwerkstoff lässt sich vielfältigen Verwendungen zuführen, bei denen die oben dargestellte Matrix äußeren Einwirkungen unterliegt, die zu einer Rissbildung führen und dann die Lebensdauer des Systems nachhaltig beeinträchtigen. Hierbei ist es bevorzugt, wenn der selbstreparierende Faserverbundwerkstoff im Bereich der Fahrzeuge, der Luft- und Raumfahrt, des Schiffsbaus, der Architektur, der Energiegewinnung durch Windkraft oder der Sportartikel eingesetzt wird.

Es hat sich demzufolge, wie oben gezeigt, als vorteilhaft erwiesen, Diisocyanate in der Glashohlfaser (A) und Diole in der Glashohlfaser (B) einzusetzen. Hierbei richtet sich zweckmäßigerweise die Auswahl des Diisocyanats an dessen Reaktivität bzw. Stabilität. Bevorzugt werden hier 1,6-Hexamethylendiisocyanat, Isophorondiisocyanat, Toluol-2,4-diisocyanat, Pentamethylendiisocyanat, Methylen-diphenyldiisocyanat, 4,4'-Diisocyanatodicyclohexylmethan, 1,5-Naphthalindiisocyanat und/oder Xyloldiisocyanat, insbesondere Hexamethylendiisocyanat, eingesetzt. Die Auswahl des Diols orientiert sich zweckmäßigerweise an dessen Viskosität. Eine zu hohe Viskosität ist für die Befüllung der Glashohlkörper bzw. Glaskapillaren nachteilig. Bevorzugt sind daher Diole mit einem vergleichsweise niedrigen Molekulargewicht. Besonders bevorzugt sind die Polyethylenglykole 200, 300 und 400, vorzugsweise Polyethylenglycol 200. Als Katalysator wird in dem System Diisocyanat/Diol, vorzugsweise eine Zinnverbindung der vorstehend beschriebenen Art, herangezogen.

Es besteht die Möglichkeit, wie oben bereits angesprochen, die Polyole, insbesondere Diole, in gewissem Umfang mit Wasser bzw. einem Alkohol, insbesondere Monoalkohol, insbesondere Methanol, zu verdünnen. Das Verdünnen mit Wasser gilt als bevorzugt. Wird als Katalysator in dem System Polyisocyanat/Polyol, insbesondere Diisocyanat/Diol, in das Polyol bzw. Diol einbezogen, dann wird hierzu vorzugsweise eine Zinnverbindung, eingesetzt, vorzugsweise Zinndibutyldilaurat.

Bei der Auswahl des Polyisocyanats, Bestandteil der Glashohlfaser (A), wird zweckmäßigerweise bedacht, dass die Polymerisation, d.h., die Aushärtung bei Raumtemperatur, erst nach einer Latenzzeit stattfindet, so dass die Monomere nicht sofort nach Austreten polymerisieren, sondern hinlänglich Zeit haben, um durch Kapillarkräfte in einen entstandenen Mikroriss oder gegebenenfalls bereits gebildeten Makroriss zu diffundieren und die gewünschte Polymerisation lokal möglichst breit erfolgt. Als Auswahlkriterium gilt unter dem Gesichtspunkt der Latenzzeit.

Wenngleich es dem Fachmann ohne Weiteres möglich ist, auf der Grundlage seines Wissens des vorliegenden technischen Bereichs, die endlosen Glasfasern, die erfindungsgemäß eingesetzt sind, bzw. damit den erfindungsgemäßem selbstreparierenden Faserverbundwerkstoff herzustellen, erscheint es zweckmäßig, hier eine besonders vorteilhafte Ausgestaltung des erfindungsgemäßen selbstreparierenden Faserverbundwerkstoffs, auch im Hinblick dessen Herstellung, einzugehen, dies im Zusammenhang mit dem vorteilhaften Einsatz eines die Glashohlfasern einbeziehenden Gewebes.

Wie gesagt, lässt sich mit besonderem Vorteil im Rahmen der Erfindung ein Gewebe als Textil heranziehen, das die angesprochenen Glashohlfasern (A) und (B) einbezieht. Demzufolge enthält das Gewebe sowohl in Kettrichtung als auch in Schussrichtung Glashohlfasern. Dabei ist es bevorzugt, dass die Glashohlfasern (A) in Schussrichtung mit dem Polyisocyanat, insbesondere dem Diisocyanat, und die Glashohlfasern in Kettrichtung mit dem Polyol, insbesondere mit dem Diol, sowie mit dem Katalysator befüllt sind, so dass die erfindungsgemäß gewünschte Auslösung der Polymerisation bei Rissbildung durch Inkontakttreten der Polyisocyanate und der Polyole eintritt.

### Hierzu im Einzelnen:

Die Befüllung der Glashohlfasern erfolgt sukzessive durch senkrechtes Eintauchen des Gewebes in die entsprechenden Polyisocyanate, insbesondere Diisocyanate, und Polyole, insbesondere Diole (mit den Glashohlfasern (A) und (B)). Hierbei wird zweckmäßigerweise so vorgegangen, dass zuerst die Kapillarenden der Hohlfasern in Kettrichtung in das vorzugsweise eingesetzte Diol/KatalysatorGemisch eintauchen, wobei diese durch die einsetzende Kapillarwirkung befüllt werden. Der Befüllvorgang kann durch Zumischen eines Farbstoffs visualisiert werden (z.B. C.I. Solvent Blue 63). Außerdem kann der Vorgang durch Erhöhung der Temperatur beschleunigt werden. Anschließend wird das Gewebe um 90° gedreht und die Schussfäden werden in gleicher Weise mit dem Diisocyanat befüllt. Es bleibt dem Fachmann vorbehalten, die Befüllung in umgekehrter Reihenfolge durchzuführen oder die Diisocyanate in Kettrichtung und die Diole in Schussrichtung einzubringen.

Das Verschließen der Glashohlfasern kann vielfältig erfolgen, insbesondere durch schnellhärtende Kleber oder in einem besonders bevorzugten Fall mittels eines Lasers. Der Vorteil besteht darin, dass die versiegelten, in getrennten Kapillaren vorrätigen angesprochenen Komponenten über Jahre hinweg eine gute Stabilität besitzen. Eine vorzeitige Inertisierung der Komponenten im Nichtschadensfall, beispielsweise durch Diffusionsphänomene im Zuge von Bewitterung, ist daher so gut wie ausgeschlossen.

Zur Herstellung des erfindungsgemäßen Faserverbundkörpers wird dann das ausgerüstete und an den Faserenden versiegelte Glashohlfasermaterial in eine Matrix eingebracht, wobei die dem Fachmann geläufigen Verfahren herangezogen werden, wozu auch auf die nachfolgenden Beispiele verwiesen sei. Es sei hier angesprochen, dass im Rahmen der Erfindung Duroplaste vorzugsweise die Matrix bilden, es jedoch in Einzelfällen auch möglich ist, Thermoplastmatrices aus Polymeren mit niedrigem Schmelzbereich heranzuziehen. Der Schmelzbereich des Thermoplasten sollte hierbei unterhalb der Siedepunkte der für die Hohlfaserbefüllung ausgewählten Komponenten (A) und (B) liegen. In jedem Fall werden gute mechanische Verbundeigenschaften erzielt, wenn die Matrix auf duroplastischen Epoxyharzen beruht.

Besonders vorteilhaft ist es, sowohl aus mechanischer als auch aus wirtschaftlicher Sicht, die Kombination der ausgerüsteten Glashohlfasergewebe mit Normalglasgewebelagen (z.B. E-Glas), bis hin zur Fertigung mehrlagiger Faserverbunde. In der Regel überwiegt in einem solchen Verbund der Anteil der Gewebelagen aus Normalglas. Das ausgerüstete Glashohlfasergewebe kann jedoch auch für die Kompositherstellung mit anderen Faserarten verwendet werden, wie in vorliegender Beschreibung auch im Einzelnen angesprochen.

Wenngleich der obige Verfahrensablauf im Wesentlichen auf spezielle Ausgestaltungen zur besseren Erläuterung auf spezielle Ausgestaltungen der Erfindung gerichtet ist, ist es dem Fachmann ohne Weiteres klar, dass die jeweiligen Abläufe entsprechend den oben dargestellten erfindungsgemäßen Ausgestaltungen der Erfindung angewandt werden können.

Die Erfindung erweist sich unter vielfältigen Gesichtspunkten gegenüber dem Stand der Technik als vorteilhaft:
Ein besonderer Vorteil besteht darin, dass, bezogen auf den Gesamtverbundkörper im Allgemeinen, eine sehr geringe Menge des selbstheilenden bzw. selbstreparierenden Systems ausreicht. Demzufolge reicht ein geringer Befüllungsgrad an latent reaktiv vorliegenden Edukten aus, um im Gesamtverbund im Falle der Rissbildung eine gute Selbstreparatur zu erreichen.

Das heißt, die mechanischen Eigenschaften werden durch die Zumischung im Allgemeinen nicht oder nicht wesentlich beeinträchtigt. Bei Eintreten eines Bruchs der Glashohlfaser, ausgelöst beispielsweise durch einen Impact und/oder bei Rissbildung im Faserverbundkörper, treten die Reaktionskomponenten in Form des Polyols und des Diols aus den Glashohlfasern aus, gelangen miteinander in Kontakt und reagieren im Riss aus. Dadurch bildet sich eine polymere elastische Kittsubstanz, die eine Verklebung der mikroskopisch kleinen Rissflächen erzeugt. Die Polymerisation wird demnach erst beim Bruch der Glashohlfasern und dem dadurch ausgelösten Inkontakttreten der angesprochenen Reaktionskomponenten ausgelöst. Dadurch, dass zeitgleich der Katalysator verfügbar wird, um die Reaktion auszulösen oder zumindest zu fördern, bedarf es keiner weiteren Aktivierung durch Wärme, UV-Belichtung oder andere Maßnahmen. Die ursprünglichen mechanischen Festigkeiten des Faserverbundwerkstoffs werden wieder vollständig bzw. weitgehend hergestellt. Hierdurch ist es möglich, faserverstärkte Verbundwerkstoffe mit geringem Gewicht zu konstruieren, dies bei gleichen mechanischen Eigenschaften und längerer mittlerer Lebensdauer. Ein besonderer Vorteil liegt darin, dass eine sehr geringe Menge an dem System der Selbstreparatur eingesetzt werden kann.

Die Erfindung soll nachfolgend anhand von Beispielen noch näher erläutert werden.

### Beispiele:

### Beispiel 1 (Befüllen von Glashohlfasern und Rovings)

Als Glashohlfasern werden Faserbündel (Rovings) (vertrieben von der Fa. Polotsk-Stekklovolokno (Weißrussland), mit der Bezeichnung ECP 11 18,8 x 2Z100) eingesetzt. Diese bestehen aus 208 Einzelfilamenten. Der Gesamttiter pro Filamentbündel beträgt 342 dtex (Einzelfilamenttiter: 1,64 dtex). Der Innendurchmesser eines Filaments beträgt im Schnitt 5 µm, der Außendurchmesser im Schnitt 10 µm. Die Faserbündel sind mit einer Aminosilan-Schlichte beschichtet.

Zur Befüllung der Rovings tauchen diese mit einem Ende in die Monomer-Lösung. Um zu verhindern, dass eine unerwünschte Diffusion des Monomers entlang der schlichtehaltigen Außenhaut der Glashohlfaser stattfindet, wurde eine sogenannte Kapillarsperre installiert. Hierzu wurden die Rovings in einem Abstand von 10 cm bis zur Eintauchzone zuvor quer zur Faserrichtung in einen Block aus Epoxidharz eingegossen. Entsprechend hierzu wurde am anderen Ende des Rovings 5 cm vom Ende her ein Epoxid-Block gegossen. Dadurch ist gewährleistet, dass die Monomerlösung, die das Kapillarende bzw. das Rovingende erreicht, nicht wieder in Gegenrichtung auf den Filamentoberflächen zurückfließt.

### Befüllung mit Diol (Polyethylenalycol 200):

Die Befüllung erfolgte horizontal, indem der Roving mit einem Ende in ein mit Diol gefülltes offenes Gefäß getaucht wurde. Die Befüllung erfolgte bei Raumtemperatur. Zur Beschleunigung der Befüllung kann die Temperatur erhöht werden. Die Befüllung kann genauso mit Druck am Kapillareinlass und Vakuumerzeugung am Kapillarauslass beschleunigt werden. Dazu wurde der Kapillareinlass mit einer mit Diol gefüllten Spritze verbunden. Am Kapillarauslass wurde eine Vakuumpumpe angeschlossen. Der am Kapillareinlass erzeugte Überdruck von 1,5-1,8 bar und der durch die Vakuumpumpe erzeugte Unterdruck von 10-50 mbar am Kapillarauslass beschleunigen den Füllvorgang mit Diol. Diese Druck/Vakuumbefüllung kann sowohl bei Raumtemperatur als auch bei 80-90°C im Trockenschrank durchgeführt werden.

(In gleicher Weise kann vertikal bei Raumtemperatur befüllt werden, indem der Roving mit den Epoxid-Blöcken an entsprechenden Stangen und Halterungen aufgehängt wird).

Zur Kontrolle des Befüllvorgangs wurde dem Diol der Farbstoff C.I. Solvent Blue 63 in einer Konzentration von 20 mg/l zugegeben.

Nach der Befüllung mit Diol wurden die Epoxid-Blöcke abgeschnitten und die Roving-Enden mit einem Sekundenkleber abgedichtet.

In nachfolgender Tabelle 1 sind die Zeiten zur Befüllung der Kapillaren in Abhängigkeit vom Diol und dessen Viskosität bei 20°C angegeben, weiterhin die Zeit, die notwendig ist, um ein Kapillarbündel nach der beschriebenen Methode auf eine Strecke von 0,5 m zu befüllen. Zum Vergleich ist auch das Ergebnis für das nach dem Stand der Technik beschriebene Dicyclopentadien aufgeführt.

**Tabelle 1**

| Diol | Viskosität (20°C) [Pa·s] | Fülldauer [h] |
|---|---|---|
| Monoethylenglykol | 0,0213 | 2-3 |
| Diethylenglykol | 0,0440 | 5-7 |
| 1,3-Propandiol | 0,0418 | 5-7 |
| 1,4-Butandiol | 0,0768 | 7-9 |
| PEG 200 | 0,0669 | 6-8 |
| PEG 300 | 0,0983 | 7-9 |
| PEG 400 | 0,1290 | 10-12 |
| PEG 600 | 0,1540 | 12-14 |
| PEG 1000 | fest | nicht möglich |
| PPG 425 | 0,1080 | 10-12 |
| PPG 2000 | 0,4350 | nicht möglich |
| DCPD | 0,1640 | nicht möglich |

| | | |
|---|---|---|
| Anmerkung: PEG = Polyethylenglykol, PPG = Polypropylenglykol, DCPD = Dicyclopentadien | | |

### Befüllung mit Diisocyanat (Hexamethylendiisocyanat):

Es gelten dieselben Versuchsrandbedingungen bezüglich der Befüllung wie bei den Diolen, wobei die entsprechenden Sicherheitsvorschriften beim Arbeiten mit Isocyanaten zu beachten sind. Nach der Befüllung mit Isocyanat wurden die Epoxid-Blöcke abgeschnitten und die Roving-Enden mit einem Sekundenkleber abgedichtet.

Die Befüllung kann durch Zumischen von geringen Teilen eines Fluoreszenzfarbstoffs zum Diisocyanat verfolgt werden (Kontrolle mit einer UV-Lampe).

### Beispiel 2 (Befüllen eines Glashohlfasergewebes)

Es wurde ein Glashohlfasergewebe (vertrieben von der Fa. Polotsk-Stekklovolokno (Weißrussland) mit der Bezeichnung T-15(P)-76) eingesetzt, Flächengewicht = 160 g/m². Das Gewebe besteht in Kette und Schuss aus Hohlfaserfilamentgarnen mit gleicher Feinheit wie in Beispiel 1 beschrieben.

Vom Geweberand ausgehend wurde in Kettrichtung in einem Abstand von ca. 10 cm in Schussrichtung ein Epoxid-Block aus Epoxidharz gegossen. Diese "Kapillarsperre" verläuft somit quer über die komplette Gewebebreite. Im Abstand von 50 cm wurde am anderen Gewebeende ebenfalls eine entsprechende Kapillarsperre gegossen. Die atmosphärische Befüllung mit Diol erfolgte in einem ersten Schritt im Trockenschrank bei 80-90°C, indem das mit Kapillarsperren versehene Gewebe senkrecht in einem Trockenschrank aufgehängt wurde. Die Befüllung erfolgte vertikal mit einer zuvor hergestellten Mischung aus Polyethylenglykol 200 (PEG 200), enthaltend 1.000 ppm Zinndibutyldilaurat als Katalysator. Nach Beendigung der Befüllung wurden die Kapillarsperren abgeschnitten und die Kettfäden an beiden Enden mit einem Sekundenkleber (Cyanacrylat) verschlossen.

Das mit PEG 200 plus Katalysator in Kettrichtung befüllte in Gewebe wurde um 90° gedreht. Nach Anbringen der Kapillarsperren erfolgte in Schussrichtung die Befüllung mit Diisocyanat (Hexamethylendiisocyanat) bei 20°C unter einem Abzug. Die Kontrolle der Befüllung erfolgte mit dem Fluoreszenzfarbstoff (Fluorol Gelb 086). Die Enden der Schussfäden wurden nach Entfernung der Kapillarsperre mit Sekundenklebstoff abgedichtet.

### Beispiel 3 (Herstellung eines Faserverbundkunststoffs)

Es wurde ein Gewebe aus Glashohlfasern herangezogen, das analog Beispiel 2 befüllt wurde. In Abwandlung zu Beispiel 2 wurde zum Zuschneiden des Gewebes und Verschließen der gefüllten Hohlfasern ein gepulster CO₂-Laser verwendet.

### Leistungsmerkmale des Lasers:

10 kHz, 25 W, mehrfaches (bis 10x) Abfahren mit v = 500 mm/sec des Schnittweges zur Trennung aller Fäden

Die zurechtgeschnittenen befüllten Glashohlfasergewebe wurden mit Normalglasfasergewebe in gleicher Dimension alternierend zu einem Schichtkörper aufgebaut. Alle Glasgewebe-Lagen wurden hierbei exakt übereinanderlegt.

Probenkörper A: Glasfaserverbundkunststoff (GFK) mit 10 Lagen Gewebe: 8 Lagen Glasgewebe (0°/0°) als Basis und darauf 2 Lagen gefüllt Glashohlfasergewebe ebenfalls in 0°/0°-Ausrichtung

Probenkörper B: Glasfaserverbundkunststoff (GFK) mit 10 Lagen Gewebe:
Obere Lagen: 4 Lagen Glasgewebe (0°/0°)
Mittlere Lagen: 2 Lagen GHF gefüllt (0°/90°)
Untere Lagen: 4 Lagen Glasgewebe (0°/0°)

Probenkörper C: Glasfaserverbundkunststoff (GFK) mit 10 Lagen Gewebe:
Oberste Lage: 1 Lage Glasgewebe (0°/0°)
darunter: 2 Lagen GHF gefüllt (0°/90°)
darunter: 4 Lagen Glasgewebe (0°/0°)
darunter: 2 Lagen GHF gefüllt (0°/90°)
unterste Lage: 1 Lage Glasgewebe (0°/0°)

Diese wurden mit einer zu Beginn flüssigen Epoxidmatrix imprägniert.

Es kamen sowohl das VARI-Verfahren (Vacuum Assisted Resin Infusion) als auch das VAP-Verfahren (Vacuum Assisted Process) zum Einsatz. Bei dem VARI-Verfahren als auch bei dem VAP-Verfahren wurden flüssiges Epoxidharz und Aminhärter im Massenverhältnis 5:2 gemischt und eingesetzt. Die Vakuuminfiltration erfolgte bei beiden Verfahren bei 100 mbar, erzeugt per Vakuumpumpe; die Aushärtung der flüssigen Harz/Härter-Mischung erfolgte über Nacht bei Raumtemperatur. Der Unterdruck von 100 mbar wurde während der gesamten Aushärtungsphase mit Hilfe von Schlauchklemmen aufrechterhalten.

Nach Aushärtung des imprägnierten Harzes wurde zunächst der gesamte Aufbau von der Metallplatte getrennt. Danach wurde der Aufbau mit Hilfe des Abreißgewebes von den Glasfaser-Gewebelagen getrennt. Mit Hilfe einer Schwingsäge wurden die Probenkörper aus der hergestellten Platte entnommen. Maße: 5-10 cm in Kettrichtung, vorzugsweise 6 cm; 11-3 cm in Schussrichtung, vorzugsweise 2 cm. Die Dicke der FVK betrug 1,2-1,3 mm.

Anschließend wurden die Probenkörper (Dimension 6 x 2 cm) mittels eines Fallprüfstandes beschädigt. Hierzu wurde ein zylinderförmiger Aufprallkörper eingesetzt mit einer runden Aufprallfläche der Abmessung von 8 mm Durchmesser und 50,3 mm² Prallfläche. Die Masse des Fallkörpers betrug 1,4633 kg, die Fallhöhe 18 cm (Erdbeschleunigung).
Aufprallenergie pro Impakt = 2,58 J

Es wurden pro Prallfläche 5 Impakte ausgelöst. Über die 2 cm Breite des Prüfkörpers wurden 4 nebeneinanderliegende Prallflächen erzeugt.

Die Selbstheilung bzw. Selbstreparatur wurde mittels einer Drei-Punkt-Biegeprüfung an den Probenkörpern mechanisch überprüft. Hierbei wurden die Prüflinge auf zwei stationären Schneiden positioniert, wobei die Auflagendistanz bzw. Stützweite 50 mm betrug. Nach Erreichen einer Vorkraft von 1 N wurde eine Dehnung des Prüfkörpers von 1% eingestellt. Danach erfolgte die Kraftmessung [N] während einer Belastungsdauer von 15 min. Messgerät. Zwick: Universalprüfmaschine.

**Tabelle 2**

| Erholungsdauer [Tage] | Krafteinwirkung | |
|---|---|---|
| | 0 min | 15 min |
| nicht-geschädigt | 50,2 | 44,9 |
| 0 (initial nach Schädigung) | 38,7 | 27,8 |
| 3 | 40,5 | 33,9 |
| 6 | 40,9 | 35,7 |
| 13 | 40,2 | 35,5 |
| 27 | 40,6 | 35,6 |

Die Tabelle 2 zeigt Messwerte aus der 3-Punkt-Biegeprüfung nach ASTM D790 für die mit Impakt beaufschlagten selbstreparierenden GFK in Abhängigkeit von der Erholungsdauer am Beispiel von Probenkörper C.

## Patentansprüche

1. Selbstreparierender Faserverbundwerkstoff mit in einer Matrix eingebetteten Glashohlfasern, **dadurch gekennzeichnet, dass** die Glashohlfasern endlos und an ihren Enden geschlossen sind, wobei Glashohlfasern (A) ein oder mehrere Polyisocyanate und Glashohlfasern (B) ein oder mehrere Polyole enthalten und die Polyisocyanate und die Polyole bei Rissbildung innerhalb der Matrix durch Bruch der Glashohlfasern aus diesen auslaufen und miteinander unter Bildung von Polyurethan reagieren und die Risse ausfüllen, wobei die Polyole, gegebenenfalls verdünnt, eine Viskosität bei 20°C von mindestens 0,01 Pa·s (gemessen nach DIN EN ISO 3219) aufweisen.

2. Selbstreparierender Faserverbundwerkstoff nach Anspruch 1, **dadurch gekennzeichnet, dass** die Matrix auf einem organischen Material in Form eines Duroplasts oder aus einem anorganischen Material in Form von Keramik oder Beton beruht, insbesondere die duroplastische Matrix auf einem Epoxidharz (EP), Polyurethan (PUR), ungesättigten Polyesterharz (UP), Polyvinylesterharz (VE), Phenol-Formaldehydharz (PF), Diallylphthalatharz (DAP), Methacrylatharz (MMA), Polyurethan (PUR), Aminoharz, insbesondere Melaminharz (MF/MP) und Harnstoffharz (UF), beruht.

3. Selbstreparierender Faserverbundwerkstoff nach einem der vorhergehenden Ansprüche, **dadurch gekennzeichnet, dass** die endlosen Glashohlfasern in ein textiles Flächengebilde einbezogen sind.

4. Selbstreparierender Faserverbundwerkstoff nach mindestens einem der Ansprüche 1 bis 3, **dadurch gekennzeichnet, dass** die Endlosfasern eine Länge von mehr als 3 cm als Filamentgarn bzw. Filamentbündel aufweisen.

5. Selbstreparierender Faserverbundwerkstoff nach einem der vorhergehenden Ansprüche, **dadurch gekennzeichnet, dass** die Glashohlfasern eine Bruchfestigkeit (nach DIN 53842-1:1976-04) von 5 bis 8 und/oder eine Zugdehnung (nach DIN 53842-1:1976-04) von 0,5 bis 5 und/oder einen Elastizitätsmodul (nach DIN 53842-1: 1976-04) von weniger als 50 GPa aufweisen.

6. Selbstreparierender Faserverbundwerkstoff nach mindestens einem der vorhergehenden Ansprüche, **dadurch gekennzeichnet, dass** der Innendurchmesser der Glashohlfasern zwischen 2 µm bis 200 µm und deren Außendurchmesser zwischen 5 µm und 1 mm liegt.

7. Selbstreparierender Faserverbundwerkstoff nach mindestens einem der vorhergehenden Ansprüche, **dadurch gekennzeichnet, dass** das Verhältnis Außendurchmesser/Innendurchmesser der Glashohlfasern 5 bis 1,5 beträgt.

8. Selbstreparierender Faserverbundwerkstoff nach mindestens einem der vorhergehenden Ansprüche, **dadurch gekennzeichnet, dass** sich der Abstand der Glashohlfasern nach der Art der Matrix und den darin auftretenden Mikrorissen bestimmt, die die Glashohlfasern (A) sowie Glashohlfasern (B) brechen, so dass die Risse unter Polyurethanbildung ausgefüllt werden, insbesondere der Abstand der Glashohlfasern (A) und Glashohlfasern (B) in der Dimension eines Mikrorisses von etwa 1 bis 5 µm liegt.

9. Selbstreparierender Faserverbundwerkstoff nach mindestens einem der vorhergehenden Ansprüche, **dadurch gekennzeichnet, dass** das Polyisocyanat in Form von Diisocyanat vorliegt als 1,6-Hexamethylendiisocyanat, Isophorondiisocyanat, Toluoldiisocyanat, Pentamethylendiisocyanat, Methylen-diphenyldiisocyanat, 4,4'-Diisocyanatodicyclohexylmethan, 1,5-Naphthalindiisocyanat und/oder Xyloldiisocyanat und das Polyol als Polyethylenglykolen, Monoethylenglykol, Diethylenglykol, 1,2- oder 1,3-Propandiol, 1,4-Butandiol oder niederes Polypropylenglykol vorliegt.

10. Selbstreparierender Faserverbundwerkstoff nach mindestens einem der vorhergehenden Ansprüche, **dadurch gekennzeichnet, dass** das Molverhältnis von Diisocyanat zu Diol, bezogen auf das Gesamtsystem, etwa 1:1 beträgt und bei Unterschiedlichkeit der Funktionalitäten des Polyols und des Polyols das jeweilige Äquivalenzverhältnis etwa 1:1 beträgt, insbesondere die Abweichung des Molverhältnisses bzw. des Äquivalenzverhältnisses nicht mehr als 10% beträgt.

11. Selbstreparierender Faserverbundwerkstoff nach mindestens einem der vorhergehenden Ansprüche, **dadurch gekennzeichnet, dass** für die Umsetzung der Polyisocyanate und der Polyole im Falle einer Rissbildung in der Matrix Katalysatoren einbezogen werden, wobei die Katalysatoren Zinnverbindungen darstellen, insbesondere der Katalysator zusammen mit dem Polyol in der Glashohlfaser (B) vorliegt.

12. Selbstreparierender Faserverbundwerkstoff nach mindestens einem der vorhergehenden Ansprüche, **dadurch gekennzeichnet, dass** in dem Faserverbundwerkstoff zusätzlich Verstärkungsfasern in Form von organischen und/oder anorganischen Fasern enthalten sind, insbesondere die weiteren Verstärkungsfasern in Form von Langfasern einer Länge von 1 ≥ L ≥ 50 mm oder von Endlosfasern einer Länge von > 50 mm vorliegen.

13. Selbstreparierender Faserverbundwerkstoff nach Anspruch 12, **dadurch gekennzeichnet, dass** die Gesamtheit der einbezogenen Fasern zu 5 bis 30 Gew.-% aus Glashohlfasern und der Rest auf die weiteren Verstärkungsfasern zurückgeht.

14. Selbstreparierender Faserverbundwerkstoff nach Anspruch 12 oder 13, **dadurch gekennzeichnet, dass** das Gewichtsverhältnis von Glashohlfasern zu weiteren Verstärkungsfasern 1:10 bis 1:1 beträgt.

15. Selbstreparierender Faserverbundwerkstoff nach mindestens einem der vorhergehenden Ansprüche, **dadurch gekennzeichnet, dass** die endlosen Glashohlfasern an ihren Enden mittels eines schnell härtenden Klebers oder Laserstrahlen geschlossen werden.

16. Selbstreparierender Faserverbundwerkstoff nach mindestens einem der vorhergehenden Ansprüche, **dadurch gekennzeichnet, dass** die Polyole, mit Wasser und/oder einem Alkohol verdünnt, bei 20°C nach DIN EN ISO 3219 eine Viskosität von mindestens 0,01 Pa·s aufweisen.

17. Verwendung des selbstreparierenden Faserverbundwerkstoffs nach mindestens einem der vorhergehenden Ansprüche im Bereich der Fahrzeuge, der Luft- und Raumfahrt, des Schiffsbaus, der Architektur, der Energiegewinnung durch Windkraft oder der Sportartikel.

## Claims

1. Self-repairing fiber-reinforced composite material comprising hollow glass fibers embedded in a matrix, **characterized in that** the hollow glass fibers are continuous and closed at their ends, wherein the hollow glass fibers (A) contain one or more polyisocyanates and the hollow glass fibers (B) contain one or more polyols, and the polyisocyanates and polyols flow out of the glass hollow fibers upon fracture of the fibers when cracks form within the matrix, react with one another to form polyurethane, and fill the cracks, wherein the polyols, optionally diluted, have a viscosity at 20°C of at least 0.01 Pa·s (measured according to DIN EN ISO 3219).

2. Self-repairing fiber-reinforced composite material according to claim 1, **characterized in that** the matrix is based on an organic material in the form of a thermoset or on an inorganic material in the form of ceramic or concrete, in particular the thermoset matrix is based on an epoxy resin (EP), polyurethane (PUR), unsaturated polyester resin (UP), polyvinyl ester resin (VE), phenolformaldehyde resin (PF), diallyl phthalate resin (DAP), methacrylate resin (MMA), polyurethane (PUR), amino resin, in particular melamine resin (MF/MP), and urea resin (UF).

3. Self-repairing fiber-reinforced composite material according to any of the preceding claims, **characterized in that** the continuous hollow glass fibers are incorporated into a textile fabric.

4. Self-repairing fiber-reinforced composite material according to at least one of claims 1 to 3, **characterized in that** the continuous fibers have a length of more than 3 cm as filament yarn or filament bundles.

5. Self-repairing fiber-reinforced composite material according to any one of the preceding claims, **characterized in that** the hollow glass fibers have a breaking strength (according to DIN 53842-1:1976-04) of 5 to 8 and/or a tensile elongation (according to DIN 53842-1:1976-04) of 0.5 to 5 and/or a modulus of elasticity (according to DIN 53842-1: 1976-04) of less than 50 GPa.

6. Self-repairing fiber-reinforced composite material according to at least one of the preceding claims, **characterized in that** the inner diameter of the hollow glass fibers is between 2 µm and 200 µm and their outer diameter is between 5 µm and 1 mm.

7. A self-repairing fiber-reinforced composite material according to at least one of the preceding claims, **characterized in that** the outer diameter-to-inner diameter ratio of the hollow glass fibers is 5 to 1.5.

8. Self-repairing fiber-reinforced composite material according to at least one of the preceding claims, **characterized in that** the spacing of the hollow glass fibers is determined by the type of matrix and the microcracks occurring therein, which break the hollow glass fibers (A) as well as hollow glass fibers (B), so that the cracks are filled by the formation of polyurethane, in particular, the spacing of the hollow glass fibers (A) and hollow glass fibers (B) is within the dimension of a microcrack of approximately 1 to 5 µm.

9. Self-repairing fiber-reinforced composite material according to at least one of the preceding claims, **characterized in that** the polyisocyanate is present in the form of diisocyanate as 1,6-hexamethylene diisocyanate, isophorone diisocyanate, toluene diisocyanate, pentamethylene diisocyanate, methylenediphenyl diisocyanate, 4,4'-diisocyanatodicyclohexylmethane, 1,5-naphthalene diisocyanate, and/or xylene diisocyanate, and the polyol is present as polyethylene glycols, monoethylene glycol, diethylene glycol, 1,2- or 1,3-propanediol, 1,4-butanediol, or low-molecular-weight polypropylene glycol.

10. Self-repairing fiber-reinforced composite material according to at least one of the preceding claims, **characterized in that** the molar ratio of diisocyanate to diol, based on the total system, is approximately 1:1, and in the event of differences in the functionalities of the polyol and the polyol, the respective equivalence ratio is approximately 1:1, in particular the deviation of the molar ratio or the equivalence ratio is no more than 10%.

11. Self-repairing fiber-reinforced composite material according to at least one of the preceding claims, **characterized in that**, in the event of crack formation in the matrix catalysts are incorporated for the reaction of the polyisocyanates and the polyols, wherein the catalysts are tin compounds, in particular the catalyst is present together with the polyol in the hollow glass fiber (B).

12. Self-repairing fiber-reinforced composite material according to at least one of the preceding claims, **characterized in that** the fiber composite material additionally contains reinforcing fibers in the form of organic and/or inorganic fibers, in particular the additional reinforcing fibers are present in the form of long fibers having a length of 1 ≥ L ≥ 50 mm or continuous fibers having a length of > 50 mm.

13. Self-repairing fiber-reinforced composite material according to claim 12, **characterized in that** 5 to 30 wt% of the total fibers incorporated consist of hollow glass fibers, with the remainder consisting of the additional reinforcing fibers.

14. A self-repairing fiber-reinforced composite material according to claim 12 or 13, **characterized in that** the weight ratio of hollow glass fibers to other reinforcing fibers is from 1:10 to 1:1.

15. Self-repairing fiber-reinforced composite material according to at least one of the preceding claims, **characterized in that** the continuous hollow glass fibers are sealed at their ends using a fast-curing adhesive or laser beams.

16. Self-repairing fiber-reinforced composite material according to at least one of the preceding claims, **characterized in that** the polyols, diluted with water and/or an alcohol, have a viscosity of at least 0.01 Pa·s at 20°C according to DIN EN ISO 3219.

17. Use of the self-repairing fiber-reinforced composite material according to at least one of the preceding claims in the fields of automotive engineering, aerospace, shipbuilding, architecture, wind power generation, or sporting goods.

## Revendications

1. Matériau composite renforcé par des fibres auto-réparant avec des fibres de verre creuses intégrées dans une matrice, **caractérisé en ce que** les fibres de verre creuses sont continues et fermées à leurs extrémités, dans lequel les fibres de verre creuses (A) contiennent un ou plusieurs polyisocyanates et les fibres de verre creuses (B) un ou plusieurs polyols et les polyisocyanates et, lors de la formation de fissures à l'intérieur de la matrice par rupture des fibres de verre creuses, les polyols s'échappent de celles-ci et réagissent entre eux en formant du polyuréthane et comblent les fissures, dans lequel les polyols, le cas échéant dilués, présentent une viscosité d'au moins 0,01 Pa·s à 20 °C (mesurée selon DIN EN ISO 3219).

2. Matériau composite renforcé par des fibres auto-réparant selon la revendication 1, **caractérisé en ce que** la matrice repose sur un matériau organique sous forme d'une résine thermodurcissable ou à partir d'un matériau inorganique sous forme de céramique ou de béton, en particulier la matrice thermodurcissable repose sur une résine époxy (EP), un polyuréthane (PUR), une résine de polyesters insaturés (UP), une résine d'ester de polyvinyle (VE), une résine phénol-formaldéhyde (PF), une résine de phtalate de diallyle (DAP), une résine méthacrylate (MMA), un polyuréthane (PUR), une résine aminée, en particulier une résine de mélamine (MF/MP) et une résine d'urée (UF).

3. Matériau composite renforcé par des fibres auto-réparant selon l'une quelconque des revendications précédentes, **caractérisé en ce que** les fibres de verre creuses continues sont incorporées dans une structure plane textile.

4. Matériau composite renforcé par des fibres auto-réparant selon au moins l'une des revendications 1 à 3, **caractérisé en ce que** les fibres continues présentent une longueur supérieure à 3 cm en tant que fil de filament ou faisceau de filaments.

5. Matériau composite renforcé par des fibres auto-réparant selon l'une quelconque des revendications précédentes, **caractérisé en ce que** les fibres de verre creuses présentent une résistance à la rupture (selon DIN 53842-1:1976-04) de 5 à 8 et/ou un allongement à la traction (selon DIN 53842-1:1976-04) de 0,5 à 5 et/ou un module d'élasticité (selon DIN 53842-1:1976-04) inférieur à 50 GPa.

6. Matériau composite renforcé par des fibres auto-réparant selon au moins l'une des revendications précédentes, **caractérisé en ce que** le diamètre intérieur des fibres de verre creuses est compris entre 2 µm et 200 µm et leur diamètre extérieur entre 5 µm et 1 mm.

7. Matériau composite renforcé par des fibres auto-réparant selon au moins l'une des revendications précédentes, **caractérisé en ce que** le rapport diamètre extérieur/diamètre intérieur des fibres de verre creuses est de 5 à 1,5.

8. Matériau composite renforcé par des fibres auto-réparant selon au moins l'une des revendications précédentes, **caractérisé en ce que** l'écartement des fibres de verre creuses est déterminé en fonction du type de matrice et des microfissures qui y apparaissent, qui cassent les fibres de verre creuses (A) ainsi que les fibres de verre creuses (B), de sorte que les fissures sont remplies sous formation de polyuréthane, en particulier l'écartement des fibres de verre creuses (A) et des fibres de verre creuses (B) est de la dimension d'une microfissure d'environ 1 à 5 µm.

9. Matériau composite renforcé par des fibres auto-réparant selon au moins l'une des revendications précédentes, **caractérisé en ce que** le polyisocyanate sous forme de diisocyanate est présent en tant que 1,6-hexaméthylènediisocyanate, diisocyanate d'isophorone, diisocyanate de toluène, diisocyanate de pentaméthylène, diisocyanate de méthylène-diphényle, 4,4'-diisocyanatodicyclohexylméthane, 1,5-diisocyanate de naphtaline et/ou diisocyanate de xylol et le polyol est présent en tant que polyéthylène glycols, monoéthylène glycol, diéthylène glycol, 1,2- ou 1,3-propanediol, 1,4-butandiol ou polypropylène glycol inférieur.

10. Matériau composite renforcé par des fibres auto-réparant selon au moins l'une des revendications précédentes, **caractérisé en ce que** le rapport molaire de diisocyanate au diol, par rapport au système global, est d'environ 1:1 et, en cas de différence des fonctionnalités du polyol et du polyol, le rapport d'équivalence respectif est d'environ 1:1, en particulier l'écart du rapport molaire ou du rapport d'équivalence n'est pas supérieur à 10 %.

11. Matériau composite renforcé par des fibres auto-réparant selon au moins l'une des revendications précédentes, **caractérisé en ce que** des catalyseurs sont incorporés dans la matrice en cas de formation de fissures pour la mise en réaction des polyisocyanates et des polyols, dans lequel les catalyseurs constituent des composés d'étain, en particulier le catalyseur est présent dans la fibre de verre creuse (B) conjointement avec le polyol.

12. Matériau composite renforcé par des fibres auto-réparant selon au moins l'une des revendications précédentes, **caractérisé en ce que** des fibres de renfort sous forme de fibres organiques et/ou inorganiques sont contenues en plus dans le matériau composite renforcé par des fibres, en particulier les autres fibres de renfort sont présentes sous forme de fibres longues d'une longueur de 1 ≥ L ≥ 50 mm ou de fibres continues d'une longueur > 50 mm.

13. Matériau composite renforcé par des fibres auto-réparant selon la revendication 12, **caractérisé en ce que** l'ensemble des fibres incorporées provient à 5 à 30 % en poids de fibres de verre creuses et le reste des autres fibres de renfort.

14. Matériau composite renforcé par des fibres auto-réparant selon la revendication 12 ou 13, **caractérisé en ce que** le rapport pondéral des fibres de verre creuses aux autres fibres de renfort est de 1:10 à 1:1.

15. Matériau composite renforcé par des fibres auto-réparant selon au moins l'une des revendications précédentes, **caractérisé en ce que** les fibres de verre creuses continues sont fermées à leurs extrémités au moyen d'une colle à durcissement rapide ou de rayons laser.

16. Matériau composite renforcé par des fibres auto-réparant selon au moins l'une des revendications précédentes, **caractérisé en ce que** les polyols, dilués avec de l'eau et/ou un alcool, présentent une viscosité d'au moins 0,01 Pa·s à 20 °C selon DIN EN ISO 3219.

17. Utilisation du matériau composite renforcé par des fibres auto-réparant selon au moins l'une des revendications précédentes dans le domaine des véhicules, de l'aéronautique et de l'aérospatiale, de la construction navale, de l'architecture, de la production d'énergie par éolienne ou des articles de sport.
